# EUROPEAN PATENT APPLICATION

(11) **EP 1 445 830 A1**
(43) Date of publication of application: **11.08.2004**
(21) Application number: 03002485.5
(22) Date of filing: 05.02.2003
(51) Int. Cl.: H01Q 21/00, H04B 1/52, H04B 1/04

(54) **Radiation efficient antenna circuit**

(71) Applicant: Sony Ericsson Mobile Communications AB, 221 88 Lund (SE)
(72) Inventor: Filimonov, Nikolai, Sony Ericsson Mobile Com., 85609 Aschheim-Dornach (DE); Varlamov, Oleg, Sony Ericsson Mobile Communication, 85609 Aschheim-Dornach (DE); Itkin, Grigory, Sony Ericsson Mobile Communication, 85609 Aschheim-Dornach (DE)
(74) Representative: Körber, Martin, Dipl.-Phys.

(57) **Abstract**

An antenna circuit for improving the radiation efficiency of a transmitter is proposed. The antenna circuit has a first antenna branch with a first antenna (2) for emitting a transmission signal provided by a power amplifier (4) of the transmitter. The part of the transmission signal power which is reflected at the first antenna branch is redirected by a first redirection means (5) to a second antenna branch where it is emitted by a second antenna (3) attached to it.

## Description

The present invention relates to an antenna circuit for mobile terminals which can be used in wireless communication systems. In particular, it relates to an antenna circuit having two radiating components.

A communication in wireless communication systems, like e.g. a GSM (Global System for Mobile Communication), DCS (Digital Cellular System), PCS (Personal Communication Service) or UMTS (Universal Mobile Telecommunications System) is based on radio links established between a mobile terminal and a base station or another mobile terminal of the respective system. A mobile terminal may be any electronic appliance adapted to exchange signals with a wireless communication system, like e.g. a Personal Digital Assistant (PDA), a mobile phone, a wireless measuring equipment or the like. There are two conditions to be distinguished for the radio link. An uplink, when the mobile terminal transmits a radio signal which is to be received by the respective base station or the other mobile terminal, and a downlink when the base station ort he other mobile terminal sends a radio signal to the mobile terminal. The signal strength received by either one of these appliances depends on the antenna power of the respective other appliance and the quality of the transmission path stretching between the two. The quality of the transmission path varies on mobile transmission conditions usually within very short time periods.

Usually, the antenna power of the transmitting appliance, i.e. either the mobile terminal or the base station, is continuously adjusted to compensate for the variations in the quality of the transmission path. The antenna power is set low for a good transmission quality and set high for a bad one. Different to a base station, the energy available on a mobile terminal is limited by its battery capacity. To make an efficient use of the limited energy resource, the transmitter circuitry of a mobile terminal has to be laid out for high radiation efficiency. This means, that the signal power supplied from the power amplifier of the transmitter has to be converted by the antenna into radiation energy at very low loss conditions. This is usually accomplished by matching the antenna branch impedance of the transmitter with that of its power amplifier output.

Unfortunately, the impedance of the antenna branch is not a fixed constant as it varies with any variations in its surroundings. Any such variation causes a mismatch in the transmission circuitry. The antenna branch of a mobile terminal transmitter is usually designed for free field conditions. Under usual operating conditions, when a user covers at least part of the antenna with some part of his body, like his hand a mismatch is therefore most commonly produced. As an actual antenna mismatch due to influences from the surroundings of a mobile terminal can generally not be predicted, the transmitter of a common mobile terminal will operate most of the time below its optimum efficiency which results in an excessive consumption of the limited energy resources provided by the battery of the mobile phone.

It is therefore an object of the present invention to provide an antenna circuit for a transmitter for a mobile terminal allowing an efficient usage of the available energy resources by improving the transmitter radiation efficiency under antenna mismatch conditions.

This object is achieved by the invention as defined in the independent claim.

In particular, the above object is achieved by an antenna circuit for improving the radiation efficiency of a transmitter with a first antenna branch having a first antenna for emitting a transmission signal provided by a power amplifier of the transmitter, a redirection means for redirecting a part of the transmission signal power reflected at the first antenna branch of the transmitter to a second antenna branch, and a second antenna for emitting the part of the transmission signal power redirected to the second antenna branch.

Allowing the reflected energy of a mismatched antenna branch to be emitted via a second radiating component increases the radiation efficiency of a transmitter in a simple but effective way. An antenna circuit as proposed is particularly useful for transmitters of mobile terminals which are operated under continuously changing ambient conditions.

Additional advantageous features of the present invention are claimed in the respective sub-claims.

A second redirection means is advantageously placed in the second antenna branch for redirecting a part of the transmission signal power reflected at the second antenna to a load and for routing the part of the transmission signal power received from the first redirection means to the second antenna. Thus, the transmission signal energy is effectively transferred to the radiating components while any signal energy which cannot be emitted is directly forwarded to a load for being consumed.

The first and/or second redirection means is effectively formed by a three-port power distributor which routes a signal power received on a first port to a second port connected to an antenna branch or an antenna and which forwards a signal power received on the second port to a third port. The three-port power distributor is hereby particularly advantageously formed by a three-port circulator, as it just distributes the energy with practically no loss.

In the following, the present invention will be explained in detail and by way of example only, with reference to the enclosed drawings, in which
- Figure 1: is a block diagram of an antenna circuitry according to the present invention, and
- Figure 2: shows the total gain achieved with an antenna circuitry shown in Figure 1 for various mismatch conditions.

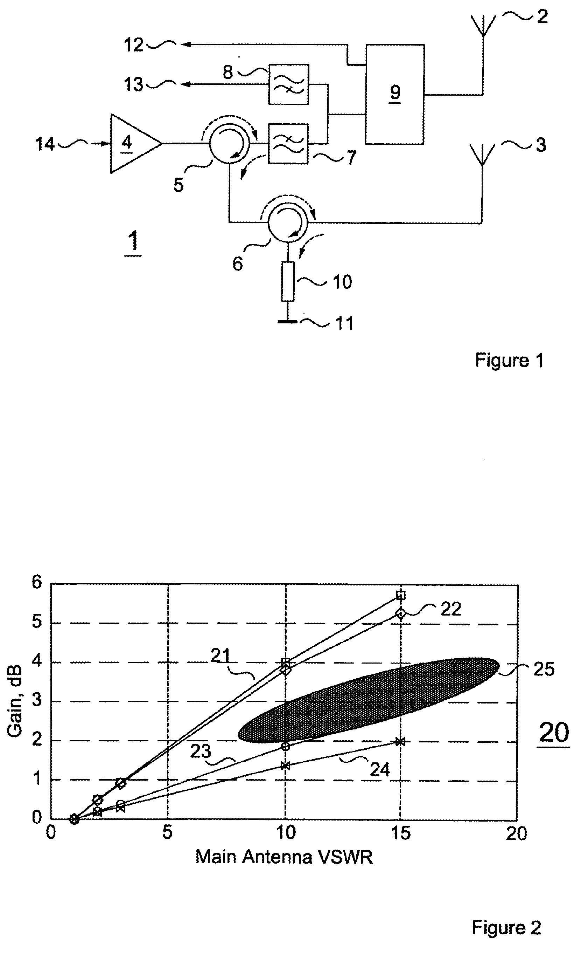

The block diagram of Fig. 1 shows an example for an antenna circuitry 1 according to the present invention. The power amplifier 4 receives an RF (radio frequency) signal from a signal processing stage of a respective appliance at its input port 14. The gain of the power amplifier 4 is usually controlled according to feedback information received from the base station to which a radio link has been established. It is set to a value such, that the transmission level guarantees a sufficiently strong RF signal at the base station. The energy consumed for that purpose is provided from a battery arrangement, which is e.g. part of a battery pack of the mobile terminal.

Most mobile terminals are adapted to operate on different frequency bands depending on the service and/or the provider used. The circuitry 1 shown in Fig. 1 is designed for a multiband transceiver for such a mobile terminal. When receiving signals from a base station on a frequency transmission band reserved for 2 G or 2.5 G wireless communication, like for instance a GSM, DCS, PCS band or the like, an antenna switch 9 is used to connect the main antenna 2 with the input 12 of a receiver circuitry not shown in block diagram 1. Under uplink conditions, the antenna switch 9 connects the main antenna 2 with the circuitry at the output of power amplifier 4.

The frequency bands reserved for an UMTS uplink are located below those reserved for an UMTS downlink. Instead of switching the main antenna 2 between the receiver and the transmitter when changing between uplink and downlink communication, the received signal can be separated from the transmitted signal by means of filters as shown in Fig. 1. An RF signal like e.g. a WCDMA (Wideband Code Division Multiple Access) coded signal received on an UMTS downlink is blocked off by the low pass filter 7 and supplied to an input 13 of the receiving section of the transceiver for further processing after passing the high pass filter 8. The RF signals provided by the power amplifier 4 can pass the low pass filter 7 for being emitted by the main antenna 2 but are blocked off by the high pass filter 8 so that the will not overload the receiving section. This applies to all frequency bands for which the transceiver is laid out, as the frequency bands for GSM, DCS and PCS systems are all located below the UMTS frequencies.

A three-port power distributor like for instance a three-port circulator 5 is set between the output of the power amplifier 4 and the low pass filter 7. As indicated by an arched, dashed lined arrow, the circulator 5 routes the signal supplied from the power amplifier 4 directly to its port which is connected with the main antenna 2. The main antenna 2 together with the circuitry interconnecting it to the circulator 5 will further be referred to as main antenna branch; any mismatch between an antenna, its interconnecting circuitry and the power amplifier 4 is defined as an antenna mismatch. Under mismatch conditions, part of the signal energy provided by the power amplifier 4 is reflected back from the antenna branch. The signal power radiated by the antenna is therefore less than the signal power supplied.

The signal power reflected from the main antenna branch enters the circulator 5 at the port connected to the low pass 7 and is therein passed on to the third port interconnected with the additional antenna 3 as indicated by the respective dashed, curved arrow. In the simplest case, the third port of the circulator 5 is directly connected to an additional antenna 3 which will at emit at least part of the signal power reflected from the main antenna 2. The radiation efficiency of the additional antenna 3 depends on the matching conditions of the additional antenna branch. Depending on the degree of a possible mismatch, a bigger or smaller amount of the signal power supplied will be reflected. Therefore a second circulator 6 is placed in the line from the third port of circulator 5 to the additional antenna 3. It forwards the signal power reflected from the main antenna branch to the additional antenna 3, and drains the signal power reflected from a possibly mismatched antenna 3 to a load 10 placed between the third port of circulator 6 and ground potential 11. The load 10 is preferably formed by an ohmic impedance, like a 50 Ohm resistor or the like for a matched termination of the third port of circulator 6. Thus, the energy reflected from the additional antenna 3 is consumed completely.

It is not necessarily required that the additional antenna 3 is operated under perfectly matched conditions. The improvement of the radiation efficiency is achieved by redirecting the signal energy reflected from a mismatched main antenna 2 to an additional antenna from which an additional fraction of the signal energy is emitted. As an antenna mismatch is strongly influenced by substances present in the vicinity of the respective antenna, the main antenna 2 and the additional antenna 3 are preferably arranged at a certain distance to each other. Such an arrangement would further allow to implement a space diversity capability.

Fig. 2 shows the calculated system gain of an antenna circuit according to the block diagram of Fig. 1. Any antenna mismatch, i.e. the mismatch between the power amplifier and its load, the antenna branch is commonly qualified by a VSWR (Voltage Standing Wave Ratio) value defining the ratio of maximum to minimum voltage in a standing wave pattern. The higher the VSWR, the greater the mismatch. The minimum VSWR which corresponds to a perfect impedance match, is unity.

The chart 20 shows the system gain achieved in dB versus the main antenna mismatch in VSWR with the mismatch of the additional antenna as parameter. The additional antenna mismatch represented by graph 21 amounts to VSWR=1. The VSWR for graph 22 is 2, for graph 23 its is 10, and for graph 24 its value is 15. As can be seen from the chart 20, the best improvement of the radiation efficiency or system gain, respectively, is achieved for a seriously mismatched main antenna 2 with a VSWR of 10 or higher and a moderately mismatched additional antenna 3 showing a VSWR below 6. For a relatively perfectly matched main antenna with a VSWR of 3 and below, only a moderate improvement is achieved as nearly all signal energy provided is already emitted from the main antenna 3. The working area 25 indicates the region for typical operation conditions. With a system gain of around 3 dB, the radiation efficiency is about doubled.

## Claims

1. Antenna circuit for improving the radiation efficiency of a transmitter for a mobile terminal of a wireless communication system with:
- a first antenna branch having a first antenna (2) for emitting a transmission signal provided by a power amplifier (4) of the transmitter,
- a first redirection means (5) for redirecting a part of the transmission signal power reflected at the first antenna branch of the transmitter to a second antenna branch, and
- a second antenna (3) for emitting the part of the transmission signal power redirected to the second antenna branch.

2. Antenna circuit according to claim 1,
**characterised by**
a second redirection means (6) located in the second antenna branch for redirecting a part of the transmission signal power reflected at the second antenna (3) to a load 10 and for routing the part of the transmission signal power received from the first redirection means to the second antenna (3).

3. Antenna circuit according to claim 1 or 2,
**characterised in**
**that** the first (5) and/or second (6) redirection means is formed by a three-port power distributor which routes a signal power received on a first port to a second port connected to an antenna branch or an antenna and which forwards a signal power received on the second port to a third port.

4. Antenna circuit according to claim 3,
**characterised in**
**that** a three-port circulator forms the three-port power distributor.
